# EUROPÄISCHE PATENTSCHRIFT

(11) **EP 3 507 048 B1**
(45) Veröffentlichungstag und Bekanntmachung des Hinweises auf die Patenterteilung: **09.12.2020**
(21) Anmeldenummer: 17783794.5
(22) Anmeldetag: 02.10.2017
(51) Int. Cl.: B23K 9/00, B23K 9/02, B23K 9/167, B23K 31/12, B23K 101/00

(54) **VERFAHREN UND SYSTEM ZUM ÜBERWACHEN EINER HERSTELLUNG EINER MEHRLAGIGEN SCHWEISSNAHT SOWIE ENGSPALTSCHWEISSVERFAHREN**
METHOD AND SYSTEM FOR MONITORING A FABRICATION OF A MULTILAYER WELD SEAM AND NARROW GAP WELDING METHOD
PROCÉDÉ ET SYSTÈME DE SURVEILLANCE D'UNE FABRICATION D'UN CORDON DE SOUDURE MULTICOUCHES ET PROCÉDÉ DE SOUDAGE À FENTE ÉTROITE

(30) Priorität: 26.10.2016 EP 16195790
(43) Veröffentlichungstag der Anmeldung: 10.07.2019
(73) Patentinhaber: Siemens Aktiengesellschaft, 80333 München (DE)
(72) Erfinder: BORGMANN, Christian, 46284 Dorsten (DE); KERN, Torsten-Ulf, 46485 Wesel (DE); NIEPOLD, Karsten, 45481 Mülheim (DE)
(86) Internationale Anmeldenummer: PCT/EP2017/074939
(87) Internationale Veröffentlichungsnummer: WO 2018/077572

(56) Entgegenhaltungen:
- DE-A1-102008 046 692
- DE-U1-202007 011 584
- JP-A- H0 289 575
- JP-A- 2005 081 419

## Beschreibung

Die Erfindung betrifft ein Verfahren zum Überwachen einer Herstellung einer mehrlagigen Schweißnaht unter Verwendung eines Engspaltschweißverfahrens gemäß dem Oberbegriff des Anspruchs 1, und ein System zum Überwachen einer Herstellung einer mehrlagigen Schweißnaht unter Verwendung eines Engspaltschweißverfahrens (siehe JP 2005 081419 A).

Des Weiteren betrifft die Erfindung ein Engspaltschweißverfahren zum Herstellen einer mehrlagigen Schweißnaht unter Verwendung des im Anspruch 1 definierten Verfahrens, siehe Anspruch 2.

Verbindungsschweißungen, beispielsweise von Turbinenmodulen werden üblicherweise mit einem mechanisierten Schweißprozess, dem sogenannten WIG(Wolfram-Inert-Gas)-Engspaltschweißprozess, hergestellt. Charakteristisch für diesen Schweißprozess ist die sogenannte Einraupentechnik, das heißt, pro Schweißnahtlage wird nur eine Schweißraupe in den Engspalt zwischen den zu verbindenden Grundwerkstoffkörpern eingebracht. Dadurch ergeben sich ein homogener Lagenaufbau und, durch den Anlasseffekt von aufeinanderfolgenden Schweißnahtlagen, bestmögliche Materialeigenschaften für die Schweißnaht und Wärmeeinflusszonen in den Grundwerkstoffen. Die Schweißparameter, wie Strom, Spannung, Drahtvorschub etc., sind dabei für das Erreichen eines guten Schweißergebnisses optimiert. Insbesondere die Anbindung zwischen Schweißnahtflanke und Grundwerkstoffkörper (Flankeneinbrand) ist essentiell für eine qualitativ hochwertige Schweißnaht. Eine fehlende Anbindung der Schweißnahtflanke an den jeweiligen Grundwerkstoffkörper führt zu sogenannten Flankenbindefehlern.

Üblicherweise wird der Schweißprozess durch verschiedenste Qualitätssicherungsmaßnahmen unterstützt. Während des Schweißens kann beispielsweise eine online-Kontrolle der Schweißparameter und deren Aufzeichnung erfolgen. Liegen die Schweißparameter während des Schweißprozesses außerhalb vorgegebener Grenzwerte, wird der Schweißprozess automatisch gestoppt.

Des Weiteren kann während des Schweißprozesses eine visuelle Kontrolle des Lichtbogens beispielsweise mittels einer Ultra-HDR(High Dynamic Range)-Videokamera erfolgen. Durch diese Kameraüberwachung kann das Schweißpersonal die Flankenanbindung zwischen den Schweißnahtlagen einerseits und den miteinander zu verschweißenden Grundwerkstoffkörpern andererseits visuell überwachen. Dieser Überwachungsschritt ist jedoch rein visuell und nicht automatisiert. Das heißt, eine fehlende Flankenanbindung, die sich in der Videoaufzeichnug zeigt, bedarf einer augenblicklichen Beurteilung durch das Schweißpersonal und gegebenenfalls eines manuellen Stoppens des Schweißprozesses durch das Schweißpersonal.

Nach dem Schweißen kann herkömmlich eine Prüfung der hergestellten Schweißnaht auf Flankenbindefehler zerstörungsfrei, beispielsweise mittels Ultraschall, erfolgen.

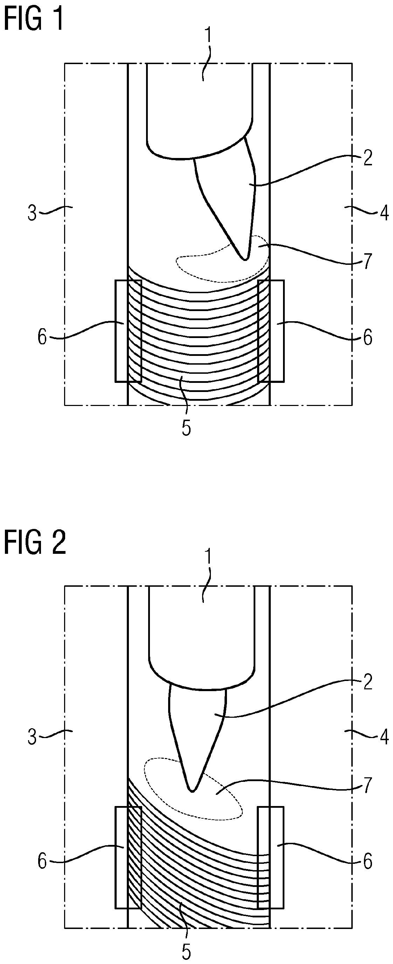

Figur 1 zeigt ein Videobild einer Videokamera, wie es dem Schweißpersonal während eines WIG-Engspaltschweißprozesses herkömmlich zur Verfügung steht. Es ist der verwendete Schweißbrenner 1 mit einer Wolfram-Elektrode 2 zu sehen. Zudem sind zwei Grundwerkstoffkörper 3 und 4 zu sehen, die über eine mehrlagige Schweißnaht miteinander verbunden werden sollen. Zwischen den Grundwerkstoffkörpern 3 und 4 sind mehrere Schweißnahtlagen 5 angeordnet, die jeweils durch eine separat eingebrachte Schweißraupe ausgebildet worden sind und aus denen die Schweißnaht sukzessive aufgebaut wird. Jeder seitliche Endabschnitt der jeweiligen Schweißnahtlage 5 sollte eine gute Anbindung an den jeweiligen Grundwerkstoffkörper 3 bzw. 4 haben. Diese Flankenanbindungen sind in den mit den Rechtecken 6 gekennzeichneten Bereichen vorhanden. Ferner ist ein Lichtbogen 7 zu sehen, der in einem Schutzstrom aus einem inerten Gas zwischen der Wolfram-Elektrode 2 und der obersten Schweißnahtlage 5 brennt. Ein nicht zu sehender Schweißzusatzwerkstoff wird in dem Videobild auf nicht erkennbare Weise von hinten zugeführt und vom Lichtbogen 7 aufgeschmolzen.

Das wichtigste optische Kriterium für eine optimale Flankenanbindung der Schweißnahtlagen 5 ist die Ausbildung einer sogenannten Hohlkehle an einer Schweißoberfläche des jeweiligen Grundwerkstoffkörpers 3 bzw. 4. Eine gut ausgebildete Hohlkehle zeigt sich jeweils in den mit den Rechtecken 6 gekennzeichneten Bereichen als Folge einer guten beidseitigen Anspülung der Grundwerkstoffkörper 3 und 4 mit dem aufgeschmolzenen Schweißraupenwerkstoff. Diese Anspülung wird vom Schweißpersonal visuell erfasst und beurteilt. Abhängig von dieser Beurteilung wird der Schweißprozess fortgesetzt oder für Korrekturmaßnahmen unterbrochen.

Ein Beispiel für eine bewusst schlecht ausgebildete Hohlkehle an dem Grundwerkstoffkörper 4 zeigt Figur 2. Im Vergleich zur guten Anspülung des Schweißraupenwerkstoffs an den Grundwerkstoffkörper 3 ist in dem in Figur 2 rechts gezeigten Rechteck 6 die schlechtere Anbindung der Schweißnahtlagen 5 an den Grundwerkstoffkörper 4 zu erkennen.

DE 20 2007 011 584 U1 offenbart ein Schweißgerät, JP 2005 081419 A offenbart eine Methode zum Lichtbogenschweißen und DE 10 2008 046 692 A1 offenbart ein Verfahren und eine Einrichtung zur zerstörungsfreien Prüfung von Rührreibschweißnähten.

Eine Aufgabe der Erfindung ist es, die Herstellung einer Schweißnaht unter Verwendung eines Engspaltschweißverfahrens zu verbessern.

Diese Aufgabe wird durch die unabhängigen Patentansprüche 1 (verfahren) und 3 (System) gelöst. Vorteilhafte Ausgestaltungen der Erfindung sind in den abhängigen Patentansprüchen weiter definiert.

Ein erfindungsgemäßes Verfahren zum Überwachen einer Herstellung einer mehrlagigen Schweißnaht unter Verwendung eines Engspaltschweißverfahrens umfasst die Schritte:
- optisches Erfassen von wenigstens einem Zustandsparameter einer Anbindung von wenigstens einer Schweißnahtlage der Schweißnaht an wenigstens einen Grundwerkstoffkörper;
- Vergleichen des erfassten Zustandsparameters mit wenigstens einem vorgegebenen Soll-Zustandsparameter; und
- Ermitteln einer Qualität der Anbindung unter Berücksichtigung eines Ergebnisses des Parametervergleichs.

Erfindungsgemäß wird die Herstellung der mehrlagigen Schweißnaht unter Verwendung des Engspaltschweißverfahrens, insbesondere WIG-Engspaltschweißverfahrens, überwacht, was bedeutet, dass eine Beurteilung der Qualität der entstehenden Schweißnaht schon während deren Erzeugung erfolgt. Dies kann eine herkömmliche nachträgliche und zerstörungsfreie Prüfung der hergestellten Schweißnaht auf Flankenbindefehler überflüssig machen, was sich vorteilhaft auf den Herstellungsaufwand und damit verbundene Kosten auswirkt.

Gemäß der Erfindung erfolgt die Überwachung der Herstellung der mehrlagigen Schweißnaht unter Verwendung des Engspaltschweißverfahrens automatisiert anhand eines Vergleichs des wenigstens einen optisch erfassten Zustandsparameters der Anbindung von wenigstens einer Schweißnahtlage der Schweißnaht an wenigstens einen Grundwerkstoffkörper mit wenigstens einem vorgegebenen Soll-Zustandsparameter. Ein solcher Vergleich und die darauf aufbauende Ermittlung der Qualität der jeweiligen Anbindung der Schweißnahtlage an den jeweiligen Grundwerkstoffkörper ist während der Herstellung der Schweißnaht bzw. online nicht durch ein Schweißpersonal realisierbar, sondern erfordert eine technische Realisierung und eine Datenverarbeitung, was die genannte Automatisierung zwangsläufig mit sich bringt. Die Ermittlung der Qualität der jeweiligen Anbindung der jeweiligen Schweißnahtlage an den jeweiligen Grundwerkstoffkörper hängt somit nicht mehr von den subjektiven visuellen Fähigkeiten und Erfahrungen des Schweißpersonals ab. Die Erfindung erfordert also den Einsatz eines technischen Systems, mit dem die visuelle bzw. optische Kontrolle der Flankenanbindung der wenigstens einen Schweißnahtlage an den wenigstens einen Grundwerkstoffkörper automatisiert wird.

Das optische Erfassen des wenigstens einen Zustandsparameters der Anbindung der wenigstens einen Schweißnahtlage der Schweißnaht an den wenigstens einen Grundwerkstoffkörper kann mittels einer optischen Erfassungseinrichtung, insbesondere einer Videokamera, beispielsweise einer HDR-Videokamera, oder dergleichen erfolgen.

Das Vergleichen des erfassten Zustandsparameters mit dem wenigstens einen vorgegebenen Soll-Zustandsparameter und das Ermitteln der Qualität der Anbindung der wenigstens einen Schweißnahtlage an den jeweiligen Grundwerkstoffkörper unter Berücksichtigung des Ergebnisses des Vergleichs kann mittels einer mit der optischen Erfassungseinrichtung verbundenen Datenverarbeitungseinrichtung erfolgen, in welcher der wenigstens eine Soll-Zustandsparameter gespeichert ist.

Die Datenverarbeitungseinrichtung kann eine Bildverarbeitungssoftware ausführen und beispielsweise eingerichtet sein, Muster aus erfassten Videobildern zu extrahieren und diese Muster als quantifizierbare Kriterien zur Qualitätskontrolle des Schweißprozesses zu nutzen. Beispielsweise kann die Datenverarbeitungseinrichtung eingerichtet sein, im Rahmen einer Mustererfassung die Formgebung einer Hohlkehle an dem wenigstens einen Grundwerkstoffkörper zu erfassen und diese erfasste Formgebung mit einer vorgegebenen Soll-Formgebung zu vergleichen. Durch den Vergleich zwischen der erfassten Formgebung und der Soll-Formgebung der Hohlkehle kann die Datenverarbeitungseinrichtung ermitteln, ob die Hohlkehle schlecht oder gut ausgebildet ist. Durch diese Automatisierung der Schweißprozessüberwachung ist ein Übersehen einer ungenügend ausgebildeten Hohlkehle durch eine eventuelle Unaufmerksamkeit des Schweißpersonals ausgeschlossen. Durch die Implementierung einer Bilderkennungssoftware können Fehlbeurteilungen der Qualität der jeweiligen Anbindung und somit der Schweißnaht insgesamt über eine redundante Mustererkennung und ein Zusammenschalten verschiedener Bewertungsansätze vermieden werden.

Die Datenverarbeitungseinrichtung kann zusätzlich eingerichtet sein, beispielsweise eine Fehlanbindung der wenigstens einen Schweißnahtlage an den wenigstens einen Grundwerkstoffkörper und/oder eine ungenügende Ausbildung einer Hohlkehle an einem Grundwerkstoffkörper zu signalisieren. Diese Signalisierung kann dem Schweißpersonal optisch und/oder akustisch wahrnehmbar gemacht werden, um dem Schweißpersonal anzuzeigen, dass der Schweißvorgang abgebrochen und korrigiert werden muss. Alternativ oder additiv kann die Signalisierung dazu genutzt werden, den Schweißprozess unabhängig von der Einschätzung des Schweißpersonals automatisch zu stoppen.

Mit dem erfindungsgemäßen Verfahren sind somit reproduzierbare Qualitätskriterien für eine Prozessautomatisierung bereitstellbar. Hierdurch ist eine Prozessoptimierung und eine Vermeidung subjektiver Einflussfaktoren und somit eine verbesserte Qualität der Verschweißung möglich. Zudem können herkömmliche Qualitätssicherungsmaßnahmen nach dem Schweißen entfallen, was eine Kostensenkung bei hoher Qualitätslage bzw. Schweißparameteroptimierung hinsichtlich der Engspaltfüllrate möglich macht. Ferner wird mit der erfindungsgemäßen Automatisierung der Überwachung des Schweißprozesses das Schweißpersonal entlastet, das bisher das Videobild über den gesamten Schweißprozess von mehreren Stunden visuell überwachen muss, und die Personalpausenzeiten können optimiert werden.

Gemäß der Erfindung wird als Zustandsparameter ein Winkel zwischen einem an den Grundwerkstoffkörper angrenzenden Endabschnitt der Schweißnahtlage und einem Normalenvektor einer Schweißoberfläche des Grundwerkstoffkörpers erfasst. Dieser Winkel wird auch als Anspülwinkel bezeichnet. Der Anspülwinkel wird zwischen dem Normalenvektor, der insbesondere identisch zu einer Horizontalen sein kann, und einer an den Endabschnitt im Bereich der Hohlkehle angelegten Tangente gebildet. Die Güte der Anspülung an den Grundwerkstoff kann somit über den Anspülwinkel beurteilt werden. So muss der Winkel beispielweise, unter Berücksichtigung der jeweiligen Kamerawinkeleinstellung, einen vorgegebenen Minimalwinkel überschreiten, ab dem die Hohlkehle als ausreichend ausgebildet bewertet bzw. die Qualität der Anbindung des Endabschnitts an den Grundwerkstoffkörper als ausreichend beurteilt wird. Wird der Mindestwinkel unterschritten, ist die Hohlkehle ungenügend ausgebildet. Eine Bilderkennungssoftware mit Mustererkennung erlaubt es, den Anspülwinkel online aus dem jeweiligen Videobild zu bestimmen und die Bewertung automatisiert, das heißt unabhängig vom Schweißpersonal durchzuführen. Gegebenenfalls können Korrekturmaßnahmen an den Schweißparametern automatisiert durchgeführt werden.

Alternativ gemäß der Erfindung wird als Zustandsparameter bevorzugt ein Winkel zwischen einem an den Grundwerkstoffkörper angrenzenden Endabschnitt der Schweißnahtlage und der Schweißoberfläche des Grundwerkstoffkörpers erfasst. Dies ist eine Abwandlung der zuletzt genannten Ausgestaltung. Falls der Winkel einen Maximalwinkel überschreitet, wird die Hohlkehle bzw. Anspülung als ungenügend betrachtet. Ist der Winkel kleiner als der oder gleich dem Maximalwinkel, wird die Hohlkehle als ausreichend ausgebildet betrachtet bzw. die Qualität der Anbindung des Endabschnitts an den Grundwerkstoffkörper als ausreichend beurteilt.

Ein erfindungsgemäßes Engspaltschweißverfahren zur Herstellung einer mehrlagigen Schweißnaht umfasst die Schritte:
- Überwachen einer Herstellung der Schweißnaht unter Verwendung des Verfahrens gemäß einer der vorgenannten Ausgestaltungen oder einer beliebigen Kombination von wenigstens zwei dieser Ausgestaltungen miteinander; und
- Erzeugen und Ausgeben eines Signals, wenn die Qualität der Anbindung wenigstens ein vorgegebenes Qualitätskriterium nicht erfüllt.

Mit diesem Verfahren sind die oben mit Bezug auf das Überwachungsverfahren genannten Vorteile entsprechend verbunden. Hierbei wird das Überwachungsverfahren verwendet, um auf Basis der damit ermittelten Anbindungsqualität der Schweißnaht zu entscheiden, ob das Signal erzeugt und ausgegeben werden soll oder nicht. Das Signal kann einem Schweißpersonal akustisch und/oder optisch wahrnehmbar gemacht werden. Alternativ oder additiv kann das Signal zum automatischen Abschalten des jeweilig verwendeten Schweißsystems verwendet werden. Das Qualitätskriterium wird vorgegeben und ist durch den wenigstens einen vorgegebenen Soll-Zustandsparameter charakterisiert, mit dem der wenigstens eine erfasste Zustandsparameter der Anbindung der wenigstens einen Schweißnahtlage der Schweißnaht an den wenigstens einen Grundwerkstoffkörper zur Überwachung der Anbindungsqualität verglichen wird.

Ein erfindungsgemäßes System zum Überwachen einer Herstellung einer mehrlagigen Schweißnaht unter Verwendung eines Engspaltschweißverfahrens umfasst wenigstens eine optische Erfassungseinrichtung zum optischen Erfassen von wenigstens einem Zustandsparameter einer Anbindung von wenigstens einer Schweißnahtlage der Schweißnaht an einen Grundwerkstoffkörper und wenigstens eine mit der Erfassungseinrichtung verbundene Datenverarbeitungseinrichtung, die eingerichtet ist, eine Qualität der Anbindung unter Berücksichtigung des erfassten Zustandsparameters zu ermitteln und ein Signal zu erzeugen und auszugeben, wenn die Qualität der Anbindung wenigstens ein vorgegebenes Qualitätskriterium nicht erfüllt.

Mit dem System sind die oben mit Bezug auf die Verfahren genannten Vorteile entsprechend verbunden. Insbesondere kann das System zum Durchführen der Verfahren eingesetzt werden.

Die optische Erfassungseinrichtung kann eine Videokamera, insbesondere eine HDR-Videokamera, eine Infrarotkamera, eine im infraroten Spektralbereich empfindliche Kamera mit einem optischen Filter oder dergleichen sein. Das System kann auch zwei oder mehrere entsprechende optische Erfassungseinrichtungen aufweisen.

Die Datenverarbeitungseinrichtung kann kabelgebunden oder kabellos mit der optischen Erfassungseinrichtung verbunden sein. Die Datenverarbeitungseinrichtung umfasst wenigstens eine Recheneinheit, beispielsweise einen Mikroprozessor, mit der beispielsweise eine Bildverarbeitungssoftware zur Mustererkennung ausführbar ist, und wenigstens eine Speichereinheit, in der wenigstens ein vorgegebener Soll-Zustandsparameter speicherbar ist.

Gemäß der Erfindung ist die Erfassungseinrichtung eingerichtet, als Zustandsparameter einen Winkel zwischen einem an den Grundwerkstoffkörper angrenzenden Endabschnitt der Schweißnahtlage und einem Normalenvektor einer Schweißoberfläche des Grundwerkstoffkörpers zu erfassen, und wobei die Datenverarbeitungseinrichtung eingerichtet ist, das Signal zu erzeugen und auszugeben, wenn der erfasste Winkel zwischen dem Endabschnitt der Schweißnahtlage und dem Normalenvektor der Schweißoberfläche des Grundwerkstoffkörpers kleiner als ein vorgegebener Minimalwinkel ist. Mit dieser Ausgestaltung sind die oben mit Bezug auf die entsprechenden Ausgestaltungen der Verfahren genannten Vorteile entsprechend verbunden.

Alternativ gemäß der Erfindung ist die Erfassungseinrichtung bevorzugt eingerichtet, als Zustandsparameter einen Winkel zwischen einem an den Grundwerkstoffkörper angrenzenden Endabschnitt der Schweißnahtlage und der Schweißoberfläche des Grundwerkstoffkörpers zu erfassen, und wobei die Datenverarbeitungseinrichtung eingerichtet ist, das Signal zu erzeugen und auszugeben, wenn der erfasste Winkel zwischen dem Endabschnitt der Schweißnahtlage und der Schweißoberfläche des Grundwerkstoffkörpers größer als ein vorgegebener Maximalwinkel ist. Mit dieser Ausgestaltung sind die oben mit Bezug auf die entsprechenden Ausgestaltungen der Verfahren genannten Vorteile entsprechend verbunden.

Die optische Erfassungseinrichtung umfasst bevorzugt entweder wenigstens eine Infrarotkamera oder eine für Infrarotstrahlung empfindliche Kamera mit einem optischen Filter.

Im Folgenden wird die Erfindung unter Bezugnahme auf die anliegenden Figuren anhand bevorzugter Ausführungsformen beispielhaft erläutert, wobei die nachfolgend dargestellten Merkmale sowohl jeweils für sich genommen, als auch in unterschiedlicher Kombination miteinander einen weiterbildenden oder vorteilhaften Aspekt der Erfindung darstellen können. Es zeigen:
- Fig. 1: eine Darstellung eines beispielhaften Videobildes mit beidseitig gut ausgebildeten Anbindungen von Schweißnahtlagen an Grundwerkstoffkörper;
- Fig. 2: eine Darstellung eines beispielhaften Videobildes mit einer gut ausgebildeten Anbindung (links) und einer schlecht ausgebildeten Anbindung (rechts) von Schweißnahtlagen an Grundwerkstoffkörper;
- Fig. 3: eine Darstellung eines beispielhaften Videobildes mit beidseitig gut ausgebildeten Anbindungen von Schweißnahtlagen an Grundwerkstoffkörper mit dargestellten Anspülwinkeln;
- Fig. 4: eine Darstellung eines beispielhaften Videobildes mit einer gut ausgebildeten Anbindung (links) und einer schlecht ausgebildeten Anbindung (rechts) von Schweißnahtlagen an Grundwerkstoffkörper mit dargestellten Anspülwinkeln;
- Fig. 5: eine Darstellung eines beispielhaften Videobildes mit beidseitig gut ausgebildeten Anbindungen von Schweißnahtlagen an Grundwerkstoffkörper mit dargestellten alternativen Anspülwinkeln;
- Fig. 6: eine Darstellung eines beispielhaften Videobildes mit einer gut ausgebildeten Anbindung (links) und einer schlecht ausgebildeten Anbindung (rechts) von Schweißnahtlagen an Grundwerkstoffkörper mit dargestellten alternativen Anspülwinkeln; und
- Fig. 7: eine Darstellung eines Videobildes mit einer gut ausgebildeten Anbindung (links) und einer schlecht ausgebildeten Anbindung (rechts) von Schweißnahtlagen an Grundwerkstoffkörper.

Figur 1 zeigt eine Darstellung eines beispielhaften Videobildes mit beidseitig gut ausgebildeten Anbindungen von Schweißnahtlagen 5 an Grundwerkstoffkörper 3 und 4. Es sind die einzelnen Schweißnahtlagen 5 zu sehen, die mittels des Schweißbrenners 1, der Wolfram-Elektrode 2, des Lichtbogens 7, des nicht gezeigten Schweißzusatzstoffs und jeweils unter Einbringung einer nicht gezeigten separaten Schweißraupe in den dargestellten Engspalt zwischen den Grundwerkstoffkörpern 3 und 4 ausgebildet werden. An den Grundstoffkörpern 3 und 4 werden durch die Anspülung der Grundwerkstoffkörper 3 und 4 mit dem geschmolzenen Werkstoff der einzelnen Schweißnahtlagen 5 jeweils eine Hohlkehle ausgebildet. Die Hohlkehlen sind in den innerhalb der Rechtecke 6 liegenden Bereichen der Grundwerkstoffkörper 3 und 4 ausgebildet.

Figur 2 zeigt eine Darstellung eines beispielhaften Videobildes mit einer gut ausgebildeten Anbindung (links) und einer schlecht ausgebildeten Anbindung (rechts) von Schweißnahtlagen 5 an Grundwerkstoffkörper 3 und 4. Wie klar zu sehen ist, ist in dem rechts dargestellten Rechteck 6 keine Hohlkehle an dem Grundwerkstoffkörper 4 ausgebildet, während in dem links dargestellten Rechteck 6 eine Hohlkehle an dem Grundwerkstoffkörper 3 vorhanden ist. Dies ist ein klares Indiz dafür, dass die Anbindung der Schweißnahtlagen 5 an den Grundwerkstoffkörper 4 ungenügend ist.

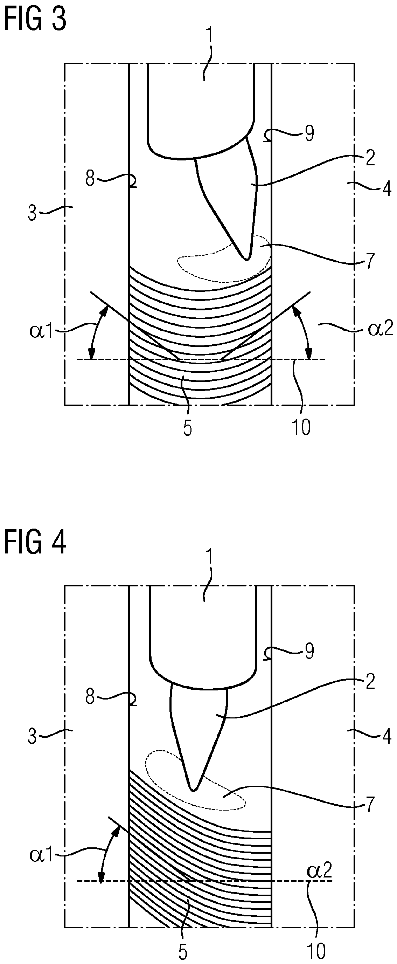

Figur 3 zeigt eine Darstellung eines beispielhaften Videobildes mit beidseitig gut ausgebildeten Anbindungen von Schweißnahtlagen 5 an Grundwerkstoffkörper 3 und 4 mit dargestellten Anspülwinkeln α₁ und α₂. Das Videobild entspricht dem in Figur 1 gezeigten Videobild. Die Größe der Anspülwinkel α₁ und α₂ hängt von der jeweiligen Kamerawinkeleinstellung ab, die jedoch bekannt ist und somit einfach berücksichtigt werden kann.

Die Anspülwinkel α₁ und α₂ werden für ein erfindungsgemäßes Verfahren zum Überwachen einer Herstellung einer mehrlagigen Schweißnaht unter Verwendung eines WIG-Engspaltschweißverfahrens verwendet. Hierzu wird zunächst wenigstens ein Zustandsparameter zu jeder seitlichen Anbindung von wenigstens einer Schweißnahtlage 5 an den jeweiligen Grundwerkstoffkörper 3 bzw. 4 erfasst. Insbesondere werden als Zustandsparameter die an den Hohlkehlen gegebenen Anspülwinkel α₁ und α₂ zwischen dem an den jeweiligen Grundwerkstoffkörper 3 bzw. 4 angrenzenden Endabschnitt der jeweiligen Schweißnahtlage 5 und einem Normalenvektor einer angrenzend zu diesem Endabschnitt angeordneten Schweißoberfläche 8 bzw. 9 des jeweiligen Grundwerkstoffkörpers 3 bzw. 4 erfasst. Der Normalenvektor ist hier identisch mit der Horizontalen 10. Eine Bilderkennungssoftware mit Mustererkennung kann verwendet werden, um die Anspülwinkel α₁ und α₂ online aus dem Videobild zu bestimmen. Hierdurch kann die Bewertung der Qualität der Anbindung der jeweiligen Schweißnahtlage 5 an den jeweiligen Grundwerkstoffkörper 3 bzw. 4 automatisiert, das heißt unabhängig vom Schweißpersonal ausgeführt werden.

Die erfassten Anspülwinkel α₁ und α₂ werden zur Ermittlung der Qualität der Anbindung mit wenigstens einem vorgegebenen Soll-Zustandsparameter verglichen. Die Anspülwinkel α₁ und α₂ werden insbesondere mit einem vorgegebenen Minimalwinkel verglichen, der den vorgegebenen Soll-Zustandsparameter darstellt. Die Qualität der Anbindung wird unter Berücksichtigung des Ergebnisses dieses Parametervergleichs ermittelt. Die Güte der Anspülung zu den Grundwerkstoffkörpern 3 und 4 kann somit über die Anspülwinkel α₁ und α₂ beurteilt werden.

Wenn ein Anspülwinkel α₁ bzw. α₂ kleiner als der vorgegebene Minimalwinkel ist, wenn also die entsprechende Anbindung der jeweiligen Schweißnahtlage 5 an den jeweiligen Grundwerkstoffkörper 3 bzw. 4 ein Qualitätskriterium nicht erfüllt, wird ein Signal, beispielsweise ein Stoppsignal oder dergleichen, erzeugt und ausgegeben.

Figur 4 zeigt eine Darstellung eines beispielhaften Videobildes mit einer gut ausgebildeten Anbindung (links) und einer schlecht ausgebildeten Anbindung (rechts) von Schweißnahtlagen 5 an Grundwerkstoffkörper 3 und 4 mit dargestellten Anspülwinkeln α₁ und α₂. Das Videobild entspricht dem in Figur 2 gezeigten Videobild. Die Größe der Anspülwinkel α₁ und α₂ hängt von der jeweiligen Kamerawinkeleinstellung ab, die jedoch bekannt ist und somit einfach berücksichtigt werden kann.

Der Anspülwinkel α₁ ist größer als der oder gleich dem vorgebebenen Minimalwinkel, so dass die in Figur 4 links gezeigte Hohlkehle bzw. die dortige Anbindung der jeweiligen Schweißnahtlage 5 an den Grundwerkstoffkörper 3 für ausreichend bzw. gut befunden wird. Hingegen ist der Anspülwinkel α₂ (=0) kleiner als der vorgegebene Minimalwinkel, woraus geschlossen wird, dass die in Figur 4 rechts gezeigte Hohlkehle bzw. Anbindung der jeweiligen Schweißnahtlage 5 an den Grundwerkstoffkörper 4 ungenügend ausgebildet ist. Folglich erfüllt die in Figur 4 rechts gezeigte Anbindung der jeweiligen Schweißnahtlage 5 an den Grundwerkstoffkörper 4 nicht das Qualitätskriterium, weshalb ein Signal erzeugt und ausgegeben wird.

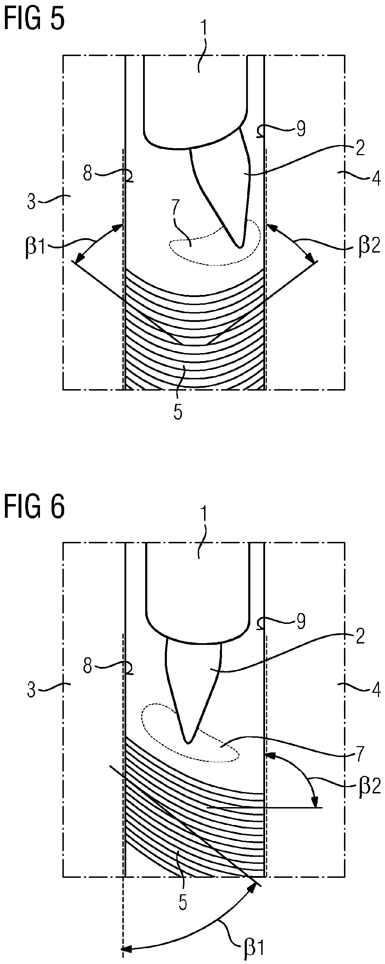

Figur 5 zeigt eine Darstellung eines beispielhaften Videobildes mit beidseitig gut ausgebildeten Anbindungen von Schweißnahtlagen 5 an Grundwerkstoffkörpern 3 und 4 mit dargestellten alternativen Anspülwinkeln β₁ und β₂. Das Videobild entspricht dem in Figur 1 gezeigten Videobild. Die Größe der alternativen Anspülwinkel β₁ und β₂ hängt von der jeweiligen Kamerawinkeleinstellung ab, die jedoch bekannt ist und somit einfach berücksichtigt werden kann.

Im Unterschied zu den Figuren 3 und 4 werden also gemäß Figur 5 als Zustandsparameter der jeweiligen Schweißnahtlage 5 die alternativen Anspülwinkel β₁ und β₂ zwischen einem an den jeweiligen Grundwerkstoffkörper 3 bzw. 4 angrenzenden Endabschnitt der jeweiligen Schweißnahtlage 5 und der jeweiligen Schweißoberfläche 8 bzw. 9 des jeweiligen Grundwerkstoffkörpers 3 bzw. 4 erfasst und mit einem vorgegebenen Soll-Zustandsparameter verglichen, um die Qualität der jeweiligen Anbindung zu ermitteln.

Wenn ein erfasster alternativer Anspülwinkel β₁ bzw. β₂ zwischen dem an den jeweiligen Grundwerkstoffkörper 3 bzw. 4 angrenzenden Endabschnitt der jeweiligen Schweißnahtlage 5 und der jeweiligen Schweißoberfläche 8 bzw. 9 des jeweiligen Grundwerkstoffkörpers 3 bzw. 4 größer als ein vorgegebener Maximalwinkel ist, wird ein Signal erzeugt und ausgegeben, da gefolgert werden würde, dass die jeweilige Hohlkehle bzw. die Anbindung der jeweiligen Schweißnahtlage 5 an den jeweiligen Grundwerkstoffkörper 3 bzw. 4 ungenügend ist.

Figur 6 zeigt eine Darstellung eines beispielhaften Videobildes mit einer gut ausgebildeten Anbindung (links) und einer schlecht ausgebildeten Anbindung (rechts) von Schweißnahtlagen 5 an Grundwerkstoffkörper 3 und 4 mit dargestellten alternativen Anspülwinkeln β₁ und β₂. Das Videobild entspricht dem in Figur 2 gezeigten Videobild. Die Größe der Anspülwinkel β₁ und β₂ hängt von der jeweiligen Kamerawinkeleinstellung ab, die jedoch bekannt ist und somit einfach berücksichtigt werden kann.

Im Unterschied zu Figur 5 ist der Anspülwinkel β₂ (=90°) größer als der vorgegebene Maximalwinkel. Daraus wird geschlossen, dass an der in Figur 6 links gezeigten Hohlkehle eine gute Anbindung der jeweiligen Schweißnahtlage 5 an den Grundwerkstoffkörper 3 gegeben ist, während an der in Figur 6 rechts gezeigten Hohlkehle eine ungenügende Anbindung der jeweiligen Schweißnahtlage 5 an den Grundwerkstoffkörper 4 gegeben ist. Folglich erfüllt die in Figur 6 rechts gezeigte Anbindung der jeweiligen Schweißnahtlage 5 an den Grundwerkstoffkörper 4 nicht das Qualitätskriterium, weshalb ein Signal erzeugt und ausgegeben wird. Eine Kombination der Beurteilungskriterien aus den Figuren 3 und 4 mit den Beurteilungskriterien aus den Figuren 5 und 6 ist zur Schaffung redundanter Beurteilungskriterien ebenfalls möglich.

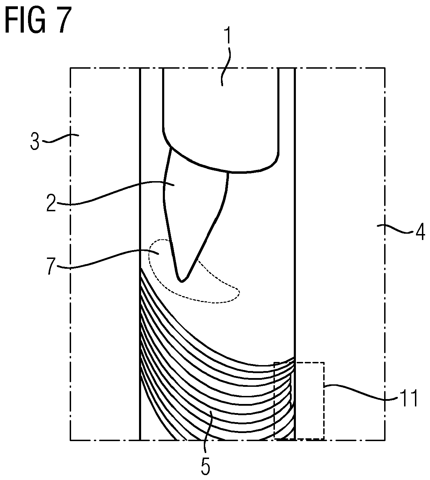

Fig. 7 zeigt eine Darstellung eines Videobildes mit einer gut ausgebildeten Anbindung (links) und einer schlecht ausgebildeten Anbindung (rechts) von Schweißnahtlagen 5 an Grundwerkstoffkörper 3 und 4.

Zur Durchführung eines Verfahrens zum Überwachen einer Herstellung einer mehrlagigen Schweißnaht unter Verwendung eines WIG-Engspaltschweißverfahrens wird zunächst wenigstens ein Zustandsparameter zu einer Anbindung von wenigstens einer Schweißnahtlage 5 an den jeweiligen Grundwerkstoffkörper 3 bzw. 4 erfasst. Insbesondere werden als Zustandsparameter kontinuierlich die Grauwertverteilungen der Schweißnaht erfasst. Es wird also gemäß Figur 7 zu jedem von der Schweißnaht aufgenommenen Videobild eine Grauwertverteilung ermittelt, die zwangsläufig wenigstens einen Zustandsparameter der jeweiligen Anbindung der jeweiligen Schweißnahtlage 5 an den jeweiligen Grundwerkstoffkörper 3 bzw. 4 enthält.

Mittels einer Bilderkennungssoftware mit Mustererkennung kann die jeweilig erfasste Grauwertverteilung online dahingehend überprüft werden, ob sie wenigstens ein Bereich aufweist, dessen Helligkeit geringer als ein vorgegebener Helligkeitsgrenzwert ist. Hierzu wird die jeweilige Grauwertverteilung insbesondere in dem in Figur 7 gezeigten Rechteck 11 mit dem vorgegebenen Helligkeitsgrenzwert verglichen. Wenn in der jeweilig erfassten Grauwertverteilung der Schweißnaht wenigstens ein Bereich vorhanden ist, dessen Helligkeit geringer als der vorgegebene Helligkeitsgrenzwert ist, wird ein Signal erzeugt und ausgegeben, da in dem dunklen Bereich ein Loch zwischen der jeweiligen Schweißnahtlage 5 und dem jeweiligen Grundwerkstoffkörper 3 bzw. 4 und somit eine ungenügende Anbindung der jeweiligen Schweißnahtlage 5 an den jeweiligen Grundwerkstoffkörper 3 bzw. 4 vorhanden ist.

In Figur 7 ist der fehlerhafte Bereich bzw. das Loch durch das Rechteck 11 markiert. Das Loch ist deutlich als dunkler Bereich in der Grauwertverteilung zu erkennen. Durch eine fortlaufende Bestimmung der Grauwertverteilung in dem fehlerhaften Bereich ist es möglich, ein solches Loch durch eine Verschiebung hin zu dunklen Grauwerten automatisch zu detektieren.

Zur Durchführung der mit Bezug auf die Figuren 3 bis 6 beschriebenen Verfahren kann ein erfindungsgemäßes System zum Überwachen einer Herstellung einer mehrlagigen Schweißnaht unter Verwendung eines Engspaltschweißverfahrens gemäß einer seiner Ausgestaltungen oder einer beliebigen Kombination von wenigstens zwei dieser Ausgestaltungen miteinander eingesetzt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wie sie in den Ansprüchen definiert sind.

## Patentansprüche

1. Verfahren zum Überwachen einer Herstellung einer mehrlagigen Schweißnaht unter Verwendung eines Engspaltschweißverfahrens, **gekennzeichnet durch** die folgenden Schritte:
- optisches Erfassen von wenigstens einem Zustandsparameter einer Anbindung von wenigstens einer Schweißnahtlage (5) der Schweißnaht an wenigstens einen Grundwerkstoffkörper (3, 4), wobei als Zustandsparameter ein Anspülwinkel (α₁, α₂) zwischen einem an den Grundwerkstoffkörper (3, 4) angrenzenden Endabschnitt der Schweißnahtlage (5) und einem Normalenvektor einer Schweißoberfläche (8, 9) des Grundwerkstoffkörpers (3, 4) erfasst wird oder wobei als Zustandsparameter ein Anspülwinkel (β₁, β₂) zwischen einem Endabschnitt der Schweißnahtlage (5) und der Schweißoberfläche (8, 9) des Grundwerkstoffkörpers (3, 4) erfasst wird;
- Vergleichen des erfassten Zustandsparameters mit wenigstens einem vorgegebenen Soll-Zustandsparameter; und
- Ermitteln einer Qualität der Anbindung unter Berücksichtigung eines Ergebnisses des Parametervergleichs.

2. Engspaltschweißverfahren zur Herstellung einer mehrlagigen Schweißnaht, aufweisend die Schritte:
- Überwachen einer Herstellung der Schweißnaht unter Verwendung des Verfahrens gemäß Anspruch 1; und
- Erzeugen und Ausgeben eines Signals, wenn die Qualität der Anbindung wenigstens ein vorgegebenes Qualitätskriterium nicht erfüllt, wobei das Signal erzeugt und ausgegeben wird, wenn der erfasste Anspülwinkel (α₁, α₂) zwischen dem Endabschnitt der Schweißnahtlage (5) und dem Normalenvektor der Schweißoberfläche (8, 9) des Grundwerkstoffkörpers (3, 4) kleiner als ein vorgegebener Minimalwinkel ist oder wobei das Signal erzeugt und ausgegeben wird, wenn der erfasste Anspülwinkel (β₁, β₂) zwischen dem Endabschnitt der Schweißnahtlage (5) und der Schweißoberfläche (8, 9) des Grundwerkstoffkörpers (3, 4) größer als ein vorgegebener Maximalwinkel ist.

3. System zum Überwachen einer Herstellung einer mehrlagigen Schweißnaht unter Verwendung eines Engspaltschweißverfahrens, aufweisend wenigstens eine optische Erfassungseinrichtung zum optischen Erfassen von wenigstens einem Zustandsparameter einer Anbindung von wenigstens einer Schweißnahtlage (5) der Schweißnaht an einen Grundwerkstoffkörper (3, 4), **gekennzeichnet durch** wenigstens eine mit der Erfassungseinrichtung verbundene Datenverarbeitungseinrichtung, die eingerichtet ist, eine Qualität der Anbindung unter Berücksichtigung des erfassten Zustandsparameters zu ermitteln und ein Signal zu erzeugen und auszugeben, wenn die Qualität der Anbindung wenigstens ein vorgegebenes Qualitätskriterium nicht erfüllt, wobei die Erfassungseinrichtung eingerichtet ist, als Zustandsparameter einen Anspülwinkel (α₁, α₂) zwischen einem an den Grundwerkstoffkörper (3, 4) angrenzenden Endabschnitt der Schweißnahtlage (5) und einem Normalenvektor einer Schweißoberfläche (8, 9) des Grundwerkstoffkörpers (3, 4) zu erfassen, und wobei die Datenverarbeitungseinrichtung eingerichtet ist, das Signal zu erzeugen und auszugeben, wenn der erfasste Anspülwinkel (α₁, α₂) zwischen dem Endabschnitt der Schweißnahtlage (5) und dem Normalenvektor der Schweißoberfläche (8, 9) des Grundwerkstoffkörpers (3, 4) kleiner als ein vorgegebener Minimalwinkel ist oder wobei die Erfassungseinrichtung eingerichtet ist, als Zustandsparameter einen Anspülwinkel (β₁, β₂) zwischen einem an den Grundwerkstoffkörper (3, 4) angrenzenden Endabschnitt der Schweißnahtlage (5) und der Schweißoberfläche (8, 9) des Grundwerkstoffkörpers (3, 4) zu erfassen, und wobei die Datenverarbeitungseinrichtung eingerichtet ist, das Signal zu erzeugen und auszugeben, wenn der erfasste Anspülwinkel (β₁, β₂) zwischen dem Endabschnitt der Schweißnahtlage (5) und der Schweißoberfläche (8, 9) des Grundwerkstoffkörpers (3, 4) größer als ein vorgegebener Maximalwinkel ist.

4. System gemäß Anspruch 3,
wobei die Erfassungseinrichtung entweder wenigstens eine Infrarotkamera oder eine für Infrarotstrahlung empfindliche Kamera mit einem optischen Filter aufweist.

## Claims

1. Method for monitoring production of a multi-layer weld using a narrow-gap welding method, **characterized by** the following steps:
- optically detecting at least one state parameter of an attachment of at least one weld layer (5) of the weld to at least one basic material body (3, 4), wherein a flushing angle (α₁, α₂) between an end section of the weld layer (5) adjoining the basic material body (3, 4) and a normal vector of a weld surface (8, 9) of the basic material body (3, 4) is detected as a state parameter, or wherein a flushing angle (β₁, β₂) between an end section of the weld layer (5) and the weld surface (8, 9) of the basic material body (3, 4) is detected as a state parameter;
- comparing the detected state parameter with at least one predefined target state parameter; and
- determining the quality of the attachment taking into account a result of the comparison of parameters.

2. Narrow-gap welding method for producing a multi-layer weld, comprising the steps:
- monitoring production of the weld using the method according to Claim 1; and
- generating and outputting a signal if the quality of the attachment does not satisfy at least one predefined quality criterion, wherein the signal is generated and output if the detected flushing angle (α₁, α₂) between the end section of the weld layer (5) and the normal vector of the weld surface (8, 9) of the basic material body (3, 4) is smaller than a predefined minimum angle, or wherein the signal is generated and output if the detected flushing angle (β₁, β₂) between the end section of the weld layer (5) and the weld surface (8, 9) of the basic material body (3, 4) is greater than a predefined maximum angle.

3. System for monitoring production of a multi-layer weld using a narrow-gap welding method, comprising at least one optical detection device for optically detecting at least one state parameter of an attachment of at least one weld layer (5) of the weld to a basic material body (3, 4), **characterized by** at least one data processing device which is connected to the detection device and is configured to determine the quality of the attachment taking into account the detected state parameter and to generate and output a signal if the quality of the attachment does not satisfy at least one predefined quality criterion, wherein the detection device is configured to detect, as a state parameter, a flushing angle (α₁, α₂) between an end section, adjoining the basic material body (3, 4), of the weld layer (5) and a normal vector of a weld surface (8, 9) of the basic material body (3, 4), and wherein the data processing device is configured to generate and output the signal if the detected flushing angle (α₁, α₂) between the end section of the weld layer (5) and the normal vector of the weld surface (8, 9) of the basic material body (3, 4) is smaller than a predefined minimum angle, or wherein the detection device is configured to detect, as a state parameter, a flushing angle (β₁, β₂) between an end section, adjoining the basic material body (3, 4), of the weld layer (5) and the weld surface (8, 9) of the basic material body (3, 4), and wherein the data processing device is configured to generate and output the signal if the detected flushing angle (β₁, β₂) between the end section of the weld layer (5) and the weld surface (8, 9) of the basic material body (3, 4) is greater than a predefined maximum angle.

4. System according to Claim 3,
wherein the detection device has either at least one infrared camera or a camera which is sensitive to infrared radiation and has an optical filter.

## Revendications

1. Procédé de contrôle d'une production d'un cordon de soudure à plusieurs couches, en utilisant un procédé de soudage à fente étroite, **caractérisé par** les stades suivants :
- le relevé optique d'au moins un paramètre d'état d'une liaison d'au moins une couche (5) du cordon de soudure a au moins un corps (3, 4) en matériau de base, dans lequel on relève, comme paramètre d'état, un angle (α₁, α₂) de charriage entre une partie d'extrémité, voisine du corps (3, 4) en matériau de base, de la couche (5) du cordon de soudure et un vecteur normal à une surface (8, 9) de soudure du corps (3, 4) en matériau de base ou dans lequel on relève, comme paramètre d'état, un angle (β₁, β₂) de charriage entre une partie d'extrémité de la couche (5) du cordon de soudure et la surface (8, 9) de soudure du corps (3, 4) en matériau de base ;
- la comparaison du paramètre d'état relevé à au moins un paramètre d'état de consigne donné à l'avance ; et
- la détermination d'une qualité de la liaison en tenant compte d'un résultat de la comparaison de paramètre.

2. Procédé de soudage à fente étroite pour la production d'un cordon de soudure à plusieurs couches, comprenant les stades :
- le contrôle d'une production du cordon de soudure en utilisant le procédé suivant la revendication 1 ; et
- la production et l'émission d'un signal, si la qualité de la liaison ne satisfait pas au moins un critère de qualité donné à l'avance, dans lequel on produit et on émet le signal, si l'angle (α₁, α₂) de charriage détecté entre la partie d'extrémité de la couche (5) du cordon de soudure et le vecteur normal à la surface (8, 9) de soudure du corps (3, 4) en matériau de base est plus petit qu'un angle minimum donné à l'avance ou dans lequel on produit et on émet le signal, si l'angle (β₁, β₂) de charriage détecté entre la partie d'extrémité de la couche (5) du cordon de soudure et la surface (8, 9) de soudure du corps (3, 4) en matériau de base est plus grand qu'un angle maximum donné à l'avance.

3. Système de contrôle d'une production d'un cordon de soudure à plusieurs couches en utilisant un procédé de soudage à fente étroite, comportant au moins un dispositif optique de relevé pour le relevé optique d'au moins un paramètre d'état d'une liaison d'au moins une couche (5) du cordon de soudure à un corps (3, 4) en matériau de base, **caractérisé par** un dispositif de traitement de données, qui est relié au dispositif de relevé et qui est conçu pour déterminer une qualité de la liaison en tenant compte du paramètre d'état relevé et pour produire et émettre un signal, si la qualité de la liaison ne satisfait pas au moins un critère de qualité donné à l'avance, le dispositif de relevé étant conçu pour relever, comme paramètre d'état, un angle (α₁, α₂) de charriage entre une partie d'extrémité, voisine du corps (3, 4) en matériau de base, de la couche (5) du cordon de soudure et un vecteur normal à une surface (8, 9) de soudure du corps (3, 4) en matériau de base, et dans lequel le dispositif de traitement de données est conçu pour produire et émettre le signal, si l'angle (α₁, α₂) de charriage détecté entre la partie d'extrémité de la couche (5) du cordon de soudure et le vecteur normal à la surface (8, 9) de soudure du corps (3, 4) en matériau de base est plus petit qu'un angle minimum donné à l'avance ou dans lequel le dispositif de relevé est conçu pour relever, comme paramètre d'état, un angle (β₁, β₂) de charriage entre une partie d'extrémité, voisine du corps (3, 4) en matériau de base, de la couche (5) du cordon de soudure et la surface (8, 9) de soudure du corps (3, 4) en matériau de base, et dans lequel le dispositif de traitement de données est conçu pour produire et émettre le signal, si l'angle (β₁, β₂) de charriage détecté entre la partie d'extrémité de la couche (5) du cordon de soudure et la surface (8, 9) de soudure du corps (3, 4) en matériau de base est plus grand qu'un angle maximum donné à l'avance.

4. Système suivant la revendication 3,
dans lequel le dispositif de relevé a, soit au moins une caméra à infrarouge, soit une caméra sensible au rayonnement infrarouge et ayant un filtre optique.
